# EUROPEAN PATENT APPLICATION

(11) **EP 4 554 275 A1**
(43) Date of publication of application: **14.05.2025**
(21) Application number: 23834727.2
(22) Date of filing: 29.06.2023
(51) Int. Cl.: H04W 24/08

(54) **DUAL-CONNECTIVITY MEASUREMENT CONTROL METHOD AND ELECTRONIC DEVICE**

(30) Priority: 05.07.2022 CN 202210797540
(71) Applicant: Vivo Mobile Communication Co., Ltd., Dongguan, Guangdong 523863 (CN)
(72) Inventor: ZHU, Yuejun, Dongguan, Guangdong 523863 (CN)
(74) Representative: Lavoix
(86) International application number: PCT/CN2023/103998
(87) International publication number: WO 2024/007960

(57) **Abstract**

This application discloses a dual connectivity measurement control method and an electronic device, and relates to the field of communication technologies. The method includes: camping, by a terminal device, on a cell supporting dual connectivity; determining whether an uplink network data packet exists in a case that the terminal device registers a multimedia call session and is in a call state; determining a congestion determining result by using a preset congestion determining rule in a case that the uplink network data packet exists; and disabling a dual connectivity measurement function of the terminal device in a case that the congestion determining result is a first result, and the terminal device is configured with dual connectivity measurement.

## Description

### CROSS-REFERENCE TO RELATED APPLICATIONS

This application claims priority to Chinese Patent Application No. 202210797540.1, entitled "DUAL CONNECTIVITY MEASUREMENT CONTROL METHOD AND ELECTRONIC DEVICE " filed with the China National Intellectual Property Administration on July 5, 2022, which is incorporated by reference in its entirety.

### TECHNICAL FIELD

This application relates to the field of communication technologies, and specifically, to a dual connectivity measurement control method and an electronic device.

### BACKGROUND

Currently, the 5G communication technology has two networking modes: NSA networking (Non-Standalone, non-standalone networking) and SA networking (Standalone, standalone networking). A mobile terminal can achieve better network experience based on NSA/SA dual mode connectivity. After the mobile terminal registers an ENDC (EUTRA NR-Dual Connectivity, 4G-5G dual connectivity) network and enables ENDC measurement, network acceleration of the mobile terminal in the ENDC network can be achieved.

The mobile terminal in the NSA/SA dual mode may add an SCG (Secondary Cell Group, secondary cell group) based on measured NR (New Radio) cells to increase a network rate after enabling the dual connectivity measurement. However, in a call process of the mobile terminal, frequent dual connectivity measurement of a network increases power consumption of the mobile terminal and affects call experience of a user.

### SUMMARY

An objective of embodiments of this application is to provide a dual connectivity measurement control method and an electronic device, to resolve a problem that in a call process of a mobile terminal, frequent dual connectivity measurement of a network increases power consumption of the mobile terminal and affects call experience of a user.

According to a first aspect, an embodiment of this application provides a dual connectivity measurement control method. The method includes:
camping, by a terminal device, on a cell supporting dual connectivity;
determining whether an uplink network data packet exists in a case that the terminal device registers a multimedia call session and is in a call state;
determining a congestion determining result by using a preset congestion determining rule in a case that the uplink network data packet exists; and
disabling a dual connectivity measurement function of the terminal device in a case that the congestion determining result is a first result, and the terminal device is configured with dual connectivity measurement.

According to a second aspect, an embodiment of this application provides a dual connectivity measurement control apparatus. The apparatus includes a camp detection module, a data detection module, a congestion detection module, and a measurement disabling module, where
the camp detection module is configured to detect whether a terminal device camps on a cell supporting dual connectivity;
the data detection module is configured to determine whether an uplink network data packet exists in a case that the terminal device registers a multimedia call session and is in a call state;
the congestion detection module is configured to determine a congestion determining result by using a preset congestion determining rule in a case that the uplink network data packet exists; and
the measurement disabling module is configured to disable a dual connectivity measurement function of the terminal device in a case that the congestion determining result is a first result, and the terminal device is configured with dual connectivity measurement.

According to a third aspect, an embodiment of this application provides an electronic device. The electronic device includes a processor, a memory, and a program or an instruction stored in the memory and executable on the processor, where when the program or the instruction is executed by the processor, the steps of the method according to the first aspect are implemented.

According to a fourth aspect, an embodiment of this application provides a readable storage medium. The readable storage medium stores a program or an instruction, where when the program or the instruction is executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction to implement the method according to the first aspect.

In the embodiments of this application, in a case that a terminal device camps on a cell supporting dual connectivity, and registers a multimedia call session and is in a call state, whether an uplink network data packet exists is determined. When the uplink network data packet exists, a congestion determining result is determined by using a preset congestion determining rule, and when the determining result is a first result, a dual connectivity measurement function is disabled to stop dual connectivity measurement, thereby reducing a power consumption loss caused by the dual connectivity measurement in a call process of the terminal device, and optimizing endurance experience of a user in the call process while ensuring a normal call.

### BRIEF DESCRIPTION OF THE DRAWINGS

FIG. 1 is a flowchart of a dual connectivity measurement control method according to an embodiment of this application;
FIG. 2 is a schematic flowchart of determining an uplink network data packet according to an embodiment of this application;
FIG. 3 is a schematic flowchart of congestion determining according to an embodiment of this application;
FIG. 4 is a schematic structural diagram of a dual connectivity measurement control apparatus according to an embodiment of this application;
FIG. 5 is a schematic structural diagram of an electronic device according to an embodiment of this application; and
FIG. 6 is a schematic diagram of a hardware structure of an electronic device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, "and/or" in this specification and the claims represents at least one of the connected objects, and the character "/" generally represents an "or" relationship between the associated objects.

A dual connectivity measurement control method provided in the embodiments of this application is described in detail below through specific embodiments and application scenarios thereof with reference to the accompanying drawings.

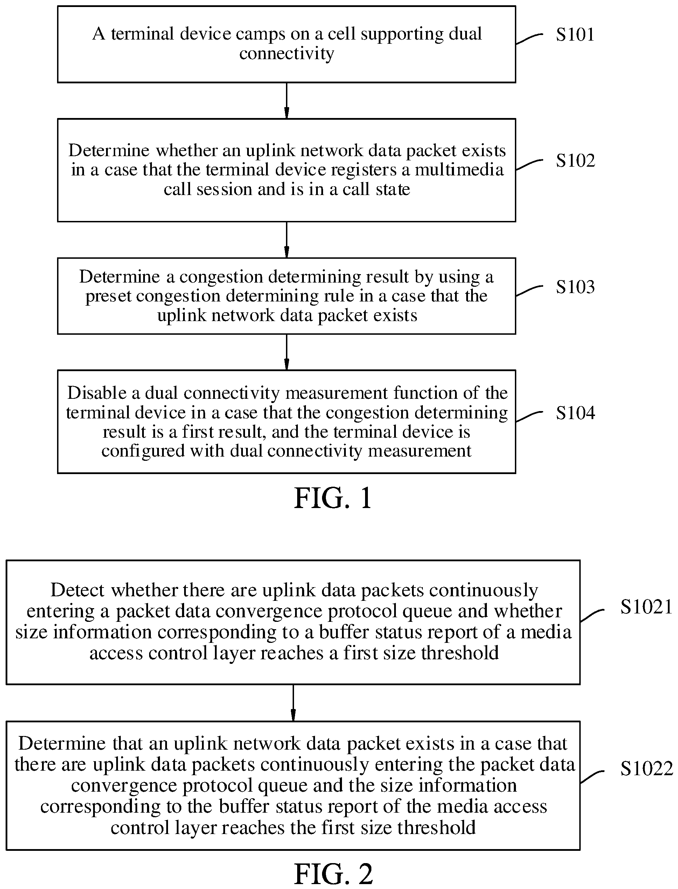

FIG. 1 is a flowchart of a dual connectivity measurement control method according to an embodiment of this application. Referring to FIG. 1, the dual connectivity measurement control method includes the following steps.

S101: A terminal device camps on a cell supporting dual connectivity.

S102: Determine whether an uplink network data packet exists in a case that the terminal device registers a multimedia call session and is in a call state.

For example, before dual connectivity measurement control is entered, that the terminal device camps on the cell supporting dual connectivity needs to be determined; otherwise, whether to disable a dual connectivity measurement function (a dual connectivity switch) of the terminal device does not need to be determined. The cell supporting dual connectivity may be understood as a cell supporting NR network and LTE network connectivity. Before registration, the terminal device selects a standard to search a cell and initiates a random access and registration request after finding the cell. After the cell is accessed and registered, an NAS layer (a non-access stratum) updates a registration state to be served, determines cell information (for example, a standard, a frequency point, and a physical cell identifier PCI), and determines, based on the cell information, a cell on which the terminal device needs to camp. When it is determined that the terminal device camps on a cell of a dual connectivity environment, whether the terminal device registers the multimedia call session, that is, whether the terminal device registers an IMS (IP Multimedia Subsystem, IP multimedia subsystem), is further determined. The terminal device needs to determine whether to disable the dual connectivity measurement function of the terminal device only when it is in the IMS status. The terminal device does not have a dual connectivity measurement (ENDC B1 measurement) requirement if it is in a circuit switch fallback CSFB (CS FallBack) or CS Call state. If the terminal device does not register the multimedia call session, a current dual connectivity measurement control procedure is ended.

If the terminal device registers the multimedia call session, whether the terminal device is in the call state is further determined. The call state of the terminal device may be determined based on a Call state of the terminal device. That is, whether the Call state of the terminal device is a Connected status is determined, and if the Call state is the Connected status, it is considered that the terminal device is in the call state; otherwise, it is considered that the terminal device is not in the call state. In an embodiment, before whether the terminal device is in the call state is further determined, whether the current terminal device is connected to the network through a data card (a phone card) may be determined first. When it is determined that the terminal device is connected to the network through the data card (the phone card), whether the terminal device is in the call state is further determined; otherwise, the current dual connectivity measurement control procedure is ended. That is, whether the terminal device is currently connected to the network through the data card (the phone card), whether the IMS is successfully established, and whether the terminal device is in a session connection status (that is, whether the Call state is the Connected status is determined) are determined. If the terminal device is currently connected to the network through the data card, the IMS is successfully established, and the terminal device is in the session connection status, it is determined to perform S102 for subsequent dual connectivity measurement control; otherwise, the current dual connectivity measurement control procedure is ended. Optionally, if the terminal device is configured with two data cards, during the determining of whether the uplink network data packet exists, a data bearer corresponding to the data card used in the current call needs to be analyzed.

The terminal device provided in this solution is a mobile device (for example, a smartphone) that supports enabling or disabling the dual connectivity measurement function of the terminal device (that is, enabling or disabling the dual connectivity switch of the terminal device), to start or stop the dual connectivity measurement. In addition, when the dual connectivity measurement function is enabled, the terminal device performs dual connectivity measurement, and uses a first network (for example, a 4G network) and a second network (for example, a 5G network) to transmit the uplink network data packet (that is, a 4G base station is used as a primary base station to transmit data, and a 5G base station is used as an extended and enhanced data transmission channel to improve a data transmission rate) in a case that a dual connectivity measurement result is that a specified network acceleration condition is met. When the dual connectivity measurement function is disabled, the terminal device stops the dual connectivity measurement, and uses only the first network to transmit the uplink network data packet. It may be understood that since the terminal device does not need to perform dual connectivity measurement when the dual connectivity measurement function is disabled, power consumption of the terminal device when the dual connectivity measurement function is disabled is lower than that when the dual connectivity measurement function is enabled.

The dual connectivity measurement function (dual connectivity switch) may be an ENDC (EUTRA NR-Dual Connectivity) switch, and the dual connectivity measurement may be ENDC B1 measurement. When the ENDC switch is turned on, the terminal device enables ENDC B1 measurement, and transmits the uplink network data packet based on a dual data channel of an NR (5G) network and an LTE (4G) network, thereby improving a data transmission rate. When the ENDC switch is turned off, the terminal device disables ENDC B1 measurement, and transmits the uplink network data packet based on a single data channel of the LTE network.

In the related art, after the terminal device registers a dual connectivity network, a call is performed by transmitting call data through a dedicated call bearer. For example, after the terminal device registers the ENDC network, a call is implemented by dialing a VoLTE (Voice over Long-Term Evolution, voice over long-term evolution) call. However, when the terminal device enables a dual connectivity measurement function (that is, turns on the ENDC switch), when network fluctuation or abnormality occurs, the terminal device in the call still enables dual connectivity measurement for network acceleration. For example, when the ENDC switch is turned off, the terminal device measures an NR cell based on a set frequency, and triggers, based on a measurement result of the NR cell, addition of an SCG (Second Cell Group, secondary cell group) to improve a rate. Since a VoLTE call is a QoS (Quality of Service) guaranteed call service, there is no need to increase the rate through the SCG to ensure call quality. Frequent measurement of the NR cell in a call process will increase the power consumption of the terminal device when making calls on the ENDC network and reduce the endurance experience of the user.

To resolve the foregoing technical problem, in this solution, when the terminal device establishes the call state, congestion detection on the data bearer is enabled. When it is found that the data bearer does not have an uplink network data packet to be transmitted, or has an uplink network data packet to be transmitted but no congestion is detected on the data bearer, the dual connectivity measurement function is disabled, thereby reducing power consumption caused by frequent network measurement of the terminal device. In addition, while data experience and endurance experience in a data and call concurrency scenario are both considered, the endurance experience of the user in a call scenario is further optimized.

When it is detected that the terminal device processes the call state, whether the dual connectivity measurement function can be disabled needs to be determined, to reduce the power consumption in the call process. For example, when the terminal device is in the call state, whether the uplink network data packet that needs to be uploaded exists is determined in real time.

When the uplink network data packet exists, S103 may be performed. When no uplink network data packet exits, whether a data transmission link is congested does not need to be determined. The current dual connectivity measurement control procedure may be ended, until it is determined in the call state of the terminal device that the uplink network data packet exists. Optionally, when the terminal device is in the call state and it is determined that no uplink network data packet exists, the dual connectivity measurement function may be disabled to stop dual connectivity measurement, thereby reducing the power consumption of the terminal device in the call process.

In a possible embodiment, whether the uplink network data packet exists may be determined by detecting whether the data bearer has an uplink data packet to be transmitted. Based on this, as a schematic flowchart of determining an uplink network data packet shown in FIG. 2, during the determining of whether the uplink network data packet exists, this solution specifically includes the following steps.

S1021: Detect whether there are uplink data packets continuously entering a packet data convergence protocol queue and whether size information corresponding to a buffer status report of a media access control layer reaches a first size threshold.

S1022: Determine that an uplink network data packet exists in a case that there are uplink data packets continuously entering the packet data convergence protocol queue and the size information corresponding to the buffer status report of the media access control layer reaches the first size threshold.

For example, when it is detected that the terminal device is in the call state, whether there are uplink data packets (for example, uplink UL IP packets) continuously added to the packet data convergence protocol (Packet Data Convergence Protocol, PDCP) queue of the terminal device is detected. In addition, the buffer status report (Buffer Status Report, BSR) of the media access control layer (MAC) of the current data bearer (an LTE data bearer) is determined, the size information (BSR size) corresponding to the buffer status report is determined, and the size information corresponding to the buffer status report is compared with the first size threshold, to determine whether the size information corresponding to the buffer status report of the media access control layer reaches the first size threshold.

Further, when it is detected that there are uplink data packets continuously entering the packet data convergence protocol queue, and the size information corresponding to the buffer status report of the MAC layer reaches the first size threshold, it may be determined that the uplink network data packet that needs to be transmitted exists. For example, the first size threshold is set to 0, that is, when the LTE data bearer has uplink data packets continuously entering the PDCP queue, and the size information BSR size of the buffer status report is not 0, it may be determined that the current LTE data bearer has the uplink data packet that needs to be transmitted.

However, when it is detected that there is no uplink data packet entering the packet data convergence protocol queue, or the size information corresponding to the buffer status report of the media access control layer does not reach the first size threshold, it is considered that no uplink network data packet that needs to be transmitted exists. For example, when no uplink data packet is detected in the PDCP queue of the LTE data bearer, or the size information BSR size of the buffer status report of the MAC is 0, the current dual connectivity measurement control procedure may be ended.

In this solution, whether an uplink network data packet exists is determined by detecting the uplink data packets entering the packet data convergence protocol queue and the size information of the buffer status report, to accurately determine a timing for enabling congestion detection of the data bearer, thereby ensuring normal transmission of the uplink data packet.

In a possible embodiment, when the terminal device is in the call state, before whether an uplink network data packet exists is determined, whether the terminal device currently has a dual connectivity measurement function control condition may be first determined. When it is determined that the terminal device has the dual connectivity measurement function control condition, a subsequent dual connectivity measurement control procedure is performed. Otherwise, the subsequent dual connectivity measurement control procedure does not need to be performed, thereby reducing unnecessary data processing operations. Based on this, when the terminal device is in the call state, before whether an uplink network data packet exists is determined, the dual connectivity measurement control method provided in this solution further includes: determining whether the terminal device is connected to the network through a data card and is in a session connection status in a case that the terminal device camps on a cell of a dual connectivity environment and is in a registered multimedia call session; and determining to enter dual connectivity measurement control in a case that the terminal device is connected to the network through the data card and is in the session connection status.

S103: Determine a congestion determining result by using a preset congestion determining rule in a case that the uplink network data packet exists.

For example, when the terminal device is in the call state and it is determined that the uplink network data packet exists, congestion detection on the data bearer is enabled, that is, the congestion determining result is determined by using the preset congestion determining rule. The congestion determining result includes a first result indicating that the data bearer is not congested, and a second result indicating that the data bearer is congested.

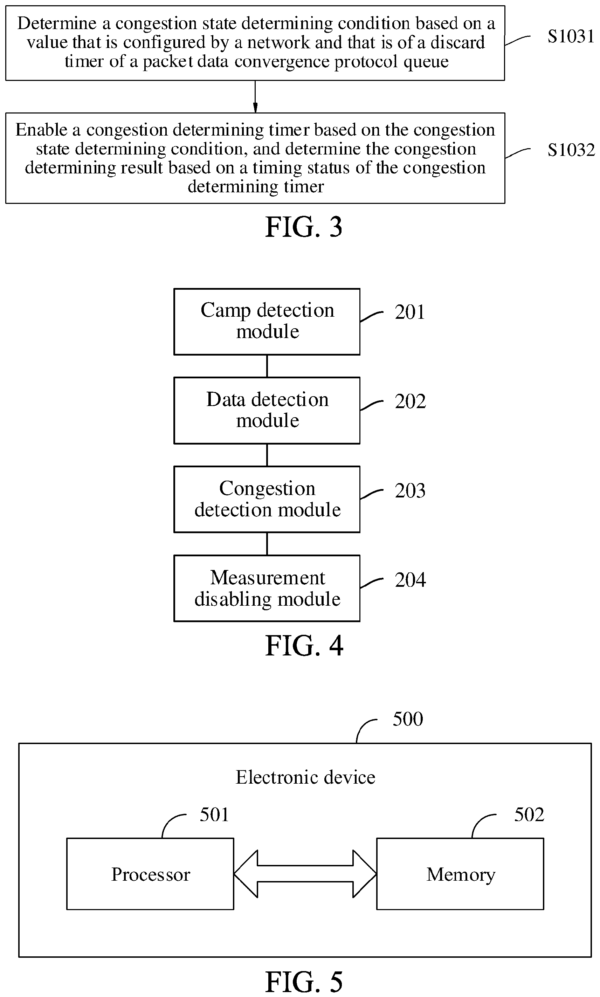

In a possible embodiment, the congestion determining result may be determined by using a discard timer of the packet data convergence protocol queue. Based on this, as a schematic flowchart of congestion determining shown in FIG. 3, during the determining of the congestion determining result by using the preset congestion determining rule, this solution specifically includes S1031 to S1033.

S1031: Determine a congestion state determining condition based on a value that is configured by a network and that is of a discard timer of a packet data convergence protocol queue.

When successfully accessing a first network cell (an LTE cell), the terminal device schedules data transmission in the first network cell. In addition, when receiving the uplink data packet that needs to be transmitted, the terminal device configures a corresponding discard timer (a PDCP discard timer) for the first network cell. Generally, when the discard timer reaches a set timing value, a corresponding uplink data packet is discarded from the packet data convergence protocol queue.

For example, the value of the discard timer configured by the packet data convergence protocol queue in the LTE data bearer is checked, and whether the congestion state determining condition is met is determined based on a number of expirations determined by the value of the discard timer. For example, the congestion state determining condition may be determining whether the number of expirations of the discard timer reaches a set number threshold, or determining that a specified congestion state determining condition is met when a buffer amount of the uplink data packet in the packet data convergence protocol queue reaches a set size threshold, and performing S1032 for congestion state determining.

In a possible embodiment, different congestion state determining conditions may be configured based on different values of the discard timer. Based on this, in this solution, the determining a congestion state determining condition based on a value that is configured by a network and that is of a discard timer of a packet data convergence protocol queue includes the following steps.

S10311: In a case that the value that is configured by the network and that is of the discard timer of the packet data convergence protocol queue is a first set value, determine that the congestion state determining condition is that the congestion state is determined when a number of expirations of the discard timer reaches a first threshold.

S10312: In a case that the value that is configured by the network and that is of the discard timer of the packet data convergence protocol queue is a second set value, determine that the congestion state determining condition is that the congestion state is determined when a size of a buffered data packet in the packet data convergence protocol queue reaches a second threshold.

The value of the discard timer provided in this solution includes a first set value and a second set value, and the second set value is greater than the first set value. For example, the first set value may be a value in a first value range, the second set value may be a value in a second value range, and values in the second value range are greater than values in the first value range. For example, the first set value may be set to 300 ms and/or 1500 ms, and the second set value may be set to a default value infinity (for example, 65535 ms).

For example, the value of the discard timer corresponding to the packet data convergence protocol queue configured by the network is determined, whether the value of the discard timer is the first set value or the second set value is determined, and a corresponding congestion state determining condition is determined based on the value of the discard timer.

When the value of the discard timer is the first set value, it is determined that the congestion state determining condition is that when the number of expirations of the discard timer reaches a first threshold (a set number threshold), congestion state determining is performed. That is, the number of expirations of the discard timer is determined. When the number of expirations reaches the first threshold, it is considered that the congestion state determining condition is met, and S1032 is performed to for congestion state determining. Different first thresholds may be set based on different configuration values of the first set value, and when the first threshold is reached, accumulated expiration durations corresponding to the values of the discard timer in different first set values are the same. For example, when the first set values are respectively set to 300 ms and 1500 ms, corresponding first thresholds are 5 times and 1 time, that is, when the accumulated expiration duration corresponding to the value of the discard timer is 1500 ms, in this case, the uplink data packet is discarded in the accumulated 1500 ms, and it may be determined that the congestion state determining condition is met.

When the value of the discard timer is the second set value, it is determined that the congestion state determining condition is that when a size of the buffered data packet in the packet data convergence protocol queue reaches the second threshold (the size threshold), congestion state determining is performed. That is, whether the size of the buffered data packet in the packet data convergence protocol queue reaches the second threshold is determined, and when the size of the buffered data packet reaches the second threshold, it is considered that the congestion state determining condition is met, and S1032 is performed for congestion state determining. For example, the second threshold is set to 1000, and when the size PB_size of the buffered data packet of the packet data convergence protocol queue reaches 1000, it is considered that the congestion state determining condition is met. In this solution, a corresponding congestion determining condition may be determined based on different values of the discard timer, to improve a timing of determining to enter the congestion state, thereby ensuring that the uplink data packet can be transmitted in time.

S1032: Enable a congestion determining timer based on the congestion state determining condition, and determine the congestion determining result based on a timing status of the congestion determining timer.

In an embodiment, the congestion determining timer includes a first congestion determining timer (PDCP DCount-Timer) and a second congestion determining timer (PDCP P-Timer), and the congestion determining timer is enabled when the congestion state determining condition is met. The first congestion determining timer is enabled when the value of the discard timer is the first set value and the number of expirations of the discard timer reaches the first threshold (for example, the accumulated expiration duration corresponding to the timing value of the discard timer reaches 1500 ms). The second congestion determining timer is enabled when the value of the discard timer is the second set value and the size of the buffered data packet of the packet data convergence protocol queue reaches the second threshold (for example, the size PB_size of the buffered data packet of the packet data convergence protocol queue reaches 1000).

In a possible embodiment, the congestion determining timer is disabled when the size of the buffered data packet in the packet data convergence protocol queue is less than a third threshold, and/or it is detected that the terminal device undergoes cell handover (that is, the terminal device is handed over from one cell to another cell). That is, when a buffer amount of the packet data convergence protocol queue is less than the third threshold (the size threshold) or the terminal device changes to a new LTE cell, the congestion determining timer is stopped or disabled.

For example, when it is determined that the congestion state determining condition is met, the congestion determining timer is enabled, and the congestion determining result is determined based on the timing status of the congestion determining timer. The congestion determining result includes a first result indicating that the data bearer is not congested, and a second result indicating that the data bearer is congested.

In a possible embodiment, in this solution, the determining the congestion determining result based on a timing status of the congestion determining timer includes: determining the congestion determining result as a second result in a case that the congestion determining timer expires; and/or determining the congestion determining result as the first result in a case that the congestion determining timer does not expire.

After the congestion determining timer is enabled, whether the congestion determining timer expires is continuously detected. If the congestion determining timer does not expire, the congestion determining result is maintained as the first result. If the congestion determining timer expires, the congestion determining result is determined as the second result. The congestion determining result may be represented by using an uplink congestion flag (Flag) of the LTE cell. That is, in a case that the congestion determining timer does not expire, Flag is set to 0, representing that the congestion determining result is the first result. In a case that the congestion determining timer expires, Flag is set to 1, representing that the congestion determining result is the second result. That is, the uplink congestion flag Flag of the LTE cell is set to 1 when the first congestion determining timer (the PDCP DCount-Timer) or the second congestion determining timer (the PDCP P-Timer) expires. Otherwise, the Flag is set to 0.

In this solution, a condition for entering the congestion state is determined based on the discard timer, and in a case that the congestion state determining condition is met, the congestion determining timer is enabled for congestion determining, to accurately determine whether the data bearer is congested, so that while ensuring that the uplink data packet can be transmitted in time, a dual connectivity measurement function is disabled in time to reduce a power loss, and ensure user data and call experience.

S104: Disable a dual connectivity measurement function of the terminal device in a case that the congestion determining result is a first result, and the terminal device is configured with dual connectivity measurement.

For example, when the congestion determining result is the first result indicating that the data bearer is not congested, and the dual connectivity measurement function is enabled, it may be considered that the current data bearer can meet the transmission rate requirement of the uplink network data packet, and network acceleration on the dual data channel is not required. In this case, the dual connectivity measurement function is disabled, to stop the dual connectivity measurement, thereby reducing the power consumption of the terminal device, saving power, and improving call duration experience of the user. However, when the congestion determining result is the first result indicating that the data bearer is not congested, but the dual connectivity measurement function is disabled, a disabled status of the dual connectivity measurement function is maintained, and the network acceleration of the dual data channel is maintained.

In a possible embodiment, after the determining the congestion determining result by using the preset congestion determining rule, the dual connectivity measurement control method provided in this solution further includes: enabling the dual connectivity measurement function of the terminal device in a case that the congestion determining result is a second result and the dual connectivity measurement function is disabled.

For example, when the congestion determining result is the second result indicating that the data bearer is congested, and the dual connectivity measurement function is disabled, it is considered that the current data bearer fails to meet the transmission rate requirement of the uplink network data packet. In this case, the dual connectivity measurement function of the terminal device is enabled, to start dual connectivity measurement for network acceleration, thereby ensuring normal transmission of the uplink network data packet. However, when the congestion determining result is the second result indicating that the data bearer is congested, but the dual connectivity measurement function is enabled, an enabled status of the dual connectivity measurement function is maintained, the network acceleration of the dual data channel is stopped, and the power consumption of the terminal device is reduced.

Optionally, when it is detected that the terminal device is in the call state, the dual connectivity measurement function may be first disabled, and subsequently, in a call process, whether the dual connectivity measurement function needs to be enabled is determined based on whether the uplink network data packet exists and the congestion determining result. Alternatively, an original dual connectivity measurement function status of the terminal device may be maintained first, and whether the dual connectivity measurement function needs to be enabled is determined based on whether the uplink network data packet exists and the congestion determining result.

In an embodiment, the congestion determining result is represented by using the uplink congestion flag. Correspondingly, the uplink congestion flag Flag of the first network cell (the LTE cell) is obtained. If the uplink congestion flag Flag = 1, it may be considered that the first network cell has many uplink data packets that need to be transmitted in this case, but there is no enough uplink resource scheduling, resulting in a failure in transmitting the uplink data packets in time. In this case, the dual connectivity measurement function of the terminal device is enabled to start dual connectivity measurement, that is, the ENDC switch is turned on to start ENDC B1 measurement for network acceleration. If the uplink congestion flag Flag = 0, it may be considered that there is sufficient uplink resource scheduling to transmit the uplink data packet in this case, and the dual connectivity measurement function is disabled to stop the dual connectivity measurement, that is, the ENDC switch is turned off to stop the ENDC B1 measurement, thereby reducing a power consumption loss caused by the ENDC B1 measurement and saving power of the terminal device.

In a possible embodiment, if the call duration is long, to ensure that a subsequent uplink data packet can be transmitted in time, corresponding steps of the dual connectivity measurement control method may be cyclically performed based on a set time interval (that is, S102 to S104 are repeated), to determine whether to disable the dual connectivity measurement function. Based on this, after whether to disable the dual connectivity measurement function is determined based on the congestion determining result, the dual connectivity measurement control method provided in this solution further includes: enabling a cycle detection timer in response to a call duration reaching a fourth threshold (duration threshold); and re-determining whether to enable the dual connectivity measurement function based on the congestion determining result in response to the cycle detection timer expiring.

For example, when the call duration of the terminal device in the call state reaches a set duration, and whether to enable the dual connectivity measurement function is re-determined based on the congestion determining result, a cycle detection timer is enabled. Each time the cycle detection timer expires, the steps of determining the congestion determining result by using the preset congestion determining rule in a case that the terminal device is in the call state and the uplink network data packet exists, and determining whether to enable the dual connectivity measurement function based on the congestion determining result are re-performed. For example, if the timing value of the cycle detection timer is set to 2 seconds, the terminal device performs congestion determining every 2 seconds, and the terminal device may dynamically control the dual connectivity measurement function based on the congestion determining result. In a scenario in which data is concurrent in a call process, the congestion state may be identified in time, thereby achieving a balance between power consumption and data experience, and improving data, call, and endurance experience of the terminal device.

In the dual connectivity measurement control method provided in the embodiments of this application, when a terminal device is in a call state, whether an uplink network data packet exists is determined. When the uplink network data packet exists, a congestion determining result is determined by using a preset congestion determining rule, and when the determining result is a first result, a dual connectivity measurement function is disabled to stop dual connectivity measurement, thereby reducing a power consumption loss caused by the dual connectivity measurement in a call process of the terminal device, and optimizing endurance experience of a user in the call process while ensuring a normal call. In addition, a timing for enabling congestion detection of the data bearer is determined by detecting the uplink data packet entering the packet data convergence protocol queue and the size information of the buffer status report, to ensure normal transmission of the uplink data packet. Moreover, a condition for entering the congestion state is determined based on the discard timer, and in a case that the congestion state determining condition is met, the congestion determining timer is enabled for congestion determining, to accurately determine whether the data bearer is congested, so that while ensuring that the uplink data packet can be transmitted in time, a dual connectivity measurement function is disabled in time to reduce a power loss, and ensure user data and call experience.

It should be noted that the dual connectivity measurement control method provided in the embodiments of this application may be performed by a dual connectivity measurement control apparatus, or a control module that is in the dual connectivity measurement control apparatus and configured to perform the dual connectivity measurement control method. In the embodiments of this application, an example in which the dual connectivity measurement control method is performed by the dual connectivity measurement control apparatus is used to describe the dual connectivity measurement control apparatus provided in the embodiments of this application.

FIG. 4 is a schematic structural diagram of a dual connectivity measurement control apparatus according to an embodiment of this application. As shown in FIG. 4, the dual connectivity measurement control apparatus includes a camp detection module 201, a data detection module 202, a congestion detection module 203, and a measurement disabling module 204.

The camp detection module 201 is configured to detect whether a terminal device camps on a cell supporting dual connectivity; the data detection module 202 is configured to determine whether an uplink network data packet exists in a case that the terminal device registers a multimedia call session and is in a call state; the congestion detection module 203 is configured to determine a congestion determining result by using a preset congestion determining rule in a case that the uplink network data packet exists; and the measurement disabling module 204 is configured to disable a dual connectivity measurement function of the terminal device in a case that the congestion determining result is a first result, and the terminal device is configured with dual connectivity measurement.

Optionally, the dual connectivity measurement control apparatus further includes a measurement enabling module, and the measurement enabling module is configured to: after the congestion determining result is determined by using the preset congestion determining rule, enable the dual connectivity measurement function of the terminal device in a case that the congestion determining result is a second result and the dual connectivity measurement function is disabled.

Optionally, when determining the congestion determining result by using the preset congestion determining rule, the congestion detection module 203 is configured to:
determine a congestion state determining condition based on a value that is configured by a network and that is of a discard timer of a packet data convergence protocol queue; and
enable a congestion determining timer based on the congestion state determining condition, and determine the congestion determining result based on a timing status of the congestion determining timer.

Optionally, when determining the congestion state determining condition based on the value that is configured by the network and that is of the discard timer of the packet data convergence protocol queue, the congestion detection module 203 is configured to:
in a case that the value that is configured by the network and that is of the discard timer of the packet data convergence protocol queue is a first set value, determine that the congestion state determining condition is that the congestion state is determined when a number of expirations of the discard timer reaches a first threshold; and
in a case that the value that is configured by the network and that is of the discard timer of the packet data convergence protocol queue is a second set value, determine that the congestion state determining condition is that the congestion state is determined when a size of a buffered data packet in the packet data convergence protocol queue reaches a second threshold.

Optionally, when determining the congestion determining result based on the timing status of the congestion determining timer, the congestion detection module 203 is configured to:
determine the congestion determining result as a second result in a case that the congestion determining timer expires; and/or
determine the congestion determining result as the first result in a case that the congestion determining timer does not expire.

Optionally, the congestion determining timer is disabled when a size of a buffered data packet in the packet data convergence protocol queue is less than a third threshold, and/or the terminal device undergoes cell handover.

Optionally, the dual connectivity measurement control apparatus further includes a cycle detection module, and the cycle detection module is configured to:
enable a cycle detection timer in response to a call duration reaching a fourth threshold; and
re-determine whether to enable the dual connectivity measurement function based on the congestion determining result in response to the cycle detection timer expiring.

In the dual connectivity measurement control apparatus provided in the embodiments of this application, when a terminal device is in a call state, whether an uplink network data packet exists is determined. When the uplink network data packet exists, a congestion determining result is determined by using a preset congestion determining rule, and when the determining result is a first result, a dual connectivity measurement function is disabled to stop dual connectivity measurement, thereby reducing a power consumption loss caused by the dual connectivity measurement in a call process of the terminal device, and optimizing endurance experience of a user in the call process while ensuring a normal call.

The dual connectivity measurement control apparatus in the embodiments of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, DNS), a personal computer (personal computer, PC), a television (television, TV), a teller machine, a self-service machine, or the like. This is not specifically limited in the embodiments of this application.

The dual connectivity measurement control apparatus in the embodiments of this application may be an apparatus having an operating system. The operating system may be an Android (Android) operating system, may be an ios operating system, or may be another possible operating system. This is not specifically limited in the embodiments of this application.

The dual connectivity measurement control apparatus provided in the embodiments of this application can implement processes implemented in the method embodiments in FIG. 1 to FIG. 3. To avoid repetition, details are not described herein again.

Optionally, as shown in FIG. 5, an embodiment of this application further provides an electronic device 500, including a processor 501, a memory 502, and a program or an instruction stored in the memory 502 and executable on the processor 501. The program or the instruction, when executed by the processor 501, implements the processes in the foregoing embodiments of the dual connectivity measurement control method, and the same technical effects can be achieved. To avoid repetition, details are not described herein again.

It should be noted that, the electronic device in the embodiments of this application includes the foregoing mobile electronic device and non-mobile electronic device.

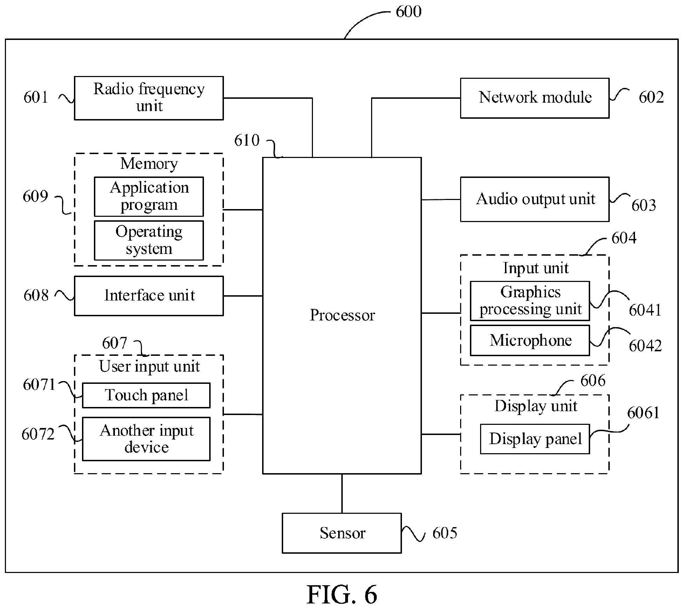

FIG. 6 is a schematic diagram of a hardware structure of an electronic device according to an embodiment of this application.

The electronic device 600 includes, but is not limited to, components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the electronic device 600 may further include a power supply (such as a battery) for supplying power to the components. The power supply may be logically connected to the processor 610 by using a power supply management system, thereby implementing functions such as charging, discharging, and power consumption management by using the power supply management system. The electronic device structure shown in FIG. 6 does not constitute a limitation on the electronic device, and the electronic device may include more or fewer components than those shown in the figure, or combine some components, or have different component arrangements. Details are not described herein again.

The processor 610 is configured to determine whether an uplink network data packet exists in a case that when a terminal device camps on a cell supporting dual connectivity and registers a multimedia call session and is in a call state;
determine a congestion determining result by using a preset congestion determining rule in a case that the uplink network data packet exists; and
disable a dual connectivity measurement function of the terminal device in a case that the congestion determining result is a first result, and the terminal device is configured with dual connectivity measurement.

When a terminal device is in a call state, whether an uplink network data packet exists is determined. When the uplink network data packet exists, a congestion determining result is determined by using a preset congestion determining rule, and when the determining result is a first result, a dual connectivity measurement function is disabled to stop dual connectivity measurement, thereby reducing a power consumption loss caused by the dual connectivity measurement in a call process of the terminal device, and optimizing endurance experience of a user in the call process while ensuring a normal call.

The processor 610 is further configured to, after determining the congestion determining result by using the preset congestion determining rule, enable the dual connectivity measurement function of the terminal device in a case that the congestion determining result is a second result and the dual connectivity measurement function is disabled.

When determining the congestion determining result by using the preset congestion determining rule, the processor 610 is further configured to:
determine a congestion state determining condition based on a value that is configured by a network and that is of a discard timer of a packet data convergence protocol queue; and
enable a congestion determining timer based on the congestion state determining condition, and determine the congestion determining result based on a timing status of the congestion determining timer.

When determining the congestion state determining condition based on the value that is configured by the network and that is of the discard timer of the packet data convergence protocol queue, the processor 610 is further configured to:
in a case that the value that is configured by the network and that is of the discard timer of the packet data convergence protocol queue is a first set value, determine that the congestion state determining condition is that the congestion state is determined when a number of expirations of the discard timer reaches a first threshold; and
in a case that the value that is configured by the network and that is of the discard timer of the packet data convergence protocol queue is a second set value, determine that the congestion state determining condition is that the congestion state is determined when a size of a buffered data packet in the packet data convergence protocol queue reaches a second threshold.

When determining the congestion determining result based on the timing status of the congestion determining timer, the processor 610 is further configured to:
determine the congestion determining result as a second result in a case that the congestion determining timer expires; and/or
determine the congestion determining result as the first result in a case that the congestion determining timer does not expire.

The processor 610 is further configured to disable the congestion determining timer when a size of a buffered data packet in the packet data convergence protocol queue is less than a third threshold, and/or the terminal device undergoes cell handover.

The processor 610 is further configured to enable a cycle detection timer in response to a call duration reaching a fourth threshold; and re-determine whether to enable the dual connectivity measurement function based on the congestion determining result in response to the cycle detection timer expiring.

When a terminal device is in a call state, whether an uplink network data packet exists is determined. When the uplink network data packet exists, a congestion determining result is determined by using a preset congestion determining rule, and when the determining result is a first result, a dual connectivity measurement function is disabled to stop dual connectivity measurement, thereby reducing a power consumption loss caused by the dual connectivity measurement in a call process of the terminal device, and optimizing endurance experience of a user in the call process while ensuring a normal call. In addition, a timing for enabling congestion detection of the data bearer is determined by detecting the uplink data packet entering the packet data convergence protocol queue and the size information of the buffer status report, to ensure normal transmission of the uplink data packet. Moreover, a condition for entering the congestion state is determined based on the discard timer, and in a case that the congestion state determining condition is met, the congestion determining timer is enabled for congestion determining, to accurately determine whether the data bearer is congested, so that while ensuring that the uplink data packet can be transmitted in time, a dual connectivity measurement function is disabled in time to reduce a power loss, and ensure user data and call experience.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (such as a camera) in a video capture mode or an image capture mode. The display unit 606 may include a display panel 6061, and the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a function key (such as a volume control key or a switch key), a trackball, a mouse, and a joystick. Details are not described herein again. The memory 609 may be configured to store a software program and various data, including but not limited to an application program and an operating system. the processor 610 may integrate an application processor and a modem. The application processor mainly processes an operating system, a user interface, an application program, and the like. The modem mainly processes wireless communication. It may be understood that, the foregoing modem processor may alternatively not be integrated into the processor 610.

An embodiment of this application further provides a readable storage medium. The readable storage medium stores a program or an instruction. When the program or the instruction is executed by a processor, the processes of the foregoing dual connectivity measurement control method embodiments are implemented, and the same technical effects can be achieved. To avoid repetition, details are not described herein again.

The processor is a processor in the electronic device in the foregoing embodiments. The readable storage medium includes a computer-readable storage medium, for example, a read-only memory (Read-Only Memory, ROM), a random access memory (Random Access Memory, RAM), a magnetic disk, or an optical disc.

An embodiment of this application further provides a chip, including a processor and a communication interface, where the communication interface is coupled to the processor, and the processor is configured to a program or an instruction, to implement all processes of the foregoing dual connectivity measurement control method embodiments, and the same technical effects can be achieved. To avoid repetition, details are not described herein again.

It should be understood that, the chip mentioned in the embodiments of this application may also be referred to as a system-level chip, a system chip, a chip system, a system on chip, or the like.

It should be noted that, in this text, the terms "include", "comprise", and any variants thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. Unless otherwise specified, an element limited by "include a/an..." does not exclude other same elements existing in the process, the method, the article, or the device that includes the element. In addition, it should be noted that, the scope of the method and apparatus in the embodiments of this application is not limited to performing functions in the order shown or discussed, and it may further include performing the functions in a substantially simultaneous manner or in reverse order according to the functions involved. For example, the described method may be performed in a different order than described, and various steps may also be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions in this application essentially or a part that contributes to the conventional technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application are described above with reference to the accompanying drawings, but this application is not limited to the foregoing detailed description. The foregoing detailed description is merely illustrative rather than limited. Under the inspiration of this application, a person skilled in the art may make many forms without departing from the purpose of this application and the protection of the claims, all of which fall within the protection of this application.

## Claims

1. A dual connectivity measurement control method, comprising:
camping, by a terminal device, on a cell supporting dual connectivity;
determining whether an uplink network data packet exists in a case that the terminal device registers a multimedia call session and is in a call state;
determining a congestion determining result by using a preset congestion determining rule in a case that the uplink network data packet exists; and
disabling a dual connectivity measurement function of the terminal device in a case that the congestion determining result is a first result, and the terminal device is configured with dual connectivity measurement.

2. The dual connectivity measurement control method according to claim 1, wherein after the determining a congestion determining result by using a preset congestion determining rule, the method further comprises:
enabling the dual connectivity measurement function of the terminal device in a case that the congestion determining result is a second result and the dual connectivity measurement function is disabled.

3. The dual connectivity measurement control method according to claim 1, wherein the determining a congestion determining result by using a preset congestion determining rule comprises:
determining a congestion state determining condition based on a value that is configured by a network and that is of a discard timer of a packet data convergence protocol queue; and
enabling a congestion determining timer based on the congestion state determining condition, and determining the congestion determining result based on a timing status of the congestion determining timer.

4. The dual connectivity measurement control method according to claim 3, wherein the determining a congestion state determining condition based on a value that is configured by a network and that is of a discard timer of a packet data convergence protocol queue comprises:
in a case that the value that is configured by the network and that is of the discard timer of the packet data convergence protocol queue is a first set value, determining that the congestion state determining condition is that the congestion state is determined when a number of expirations of the discard timer reaches a first threshold; and
in a case that the value that is configured by the network and that is of the discard timer of the packet data convergence protocol queue is a second set value, determining that the congestion state determining condition is that the congestion state is determined when a size of a buffered data packet in the packet data convergence protocol queue reaches a second threshold.

5. The dual connectivity measurement control method according to claim 4, wherein the determining the congestion determining result based on a timing status of the congestion determining timer comprises:
determining the congestion determining result as a second result in a case that the congestion determining timer expires; and/or
determining that the congestion determining result as the first result in a case that the congestion determining timer does not expire.

6. The dual connectivity measurement control method according to claim 3, wherein the congestion determining timer is disabled when a size of a buffered data packet in the packet data convergence protocol queue is less than a third threshold, and/or the terminal device undergoes cell handover.

7. The dual connectivity measurement control method according to any one of claims 1 to 6, further comprising:
enabling a cycle detection timer in response to a call duration reaching a fourth threshold; and
re-determining whether to enable the dual connectivity measurement function based on the congestion determining result in response to the cycle detection timer expiring.

8. A dual connectivity measurement control apparatus, comprising a camp detection module, a data detection module, a congestion detection module, and a measurement disabling module, wherein
the camp detection module is configured to detect whether a terminal device camps on a cell supporting dual connectivity;
the data detection module is configured to determine whether an uplink network data packet exists in a case that the terminal device registers a multimedia call session and is in a call state;
the congestion detection module is configured to determine a congestion determining result by using a preset congestion determining rule in a case that the uplink network data packet exists; and
the measurement disabling module is configured to disable a dual connectivity measurement function of the terminal device in a case that the congestion determining result is a first result, and the terminal device is configured with dual connectivity measurement.

9. The dual connectivity measurement control apparatus according to claim 8, further comprising a measurement enabling module, configured to enable the dual connectivity measurement function of the terminal device in a case that the congestion determining result is a second result and the dual connectivity measurement function is disabled.

10. The dual connectivity measurement control apparatus according to claim 8, wherein the congestion detection module determining a congestion determining result by using a preset congestion determining rule comprises:
determining a congestion state determining condition based on a value that is configured by a network and that is of a discard timer of a packet data convergence protocol queue; and
enabling a congestion determining timer based on the congestion state determining condition, and determining the congestion determining result based on a timing status of the congestion determining timer.

11. An electronic device, comprising a processor, a memory, and a program or an instruction stored in the memory and executable on the processor, wherein when the program or the instruction is executed by the processor, the method according to any one of claims 1 to 7 is implemented.

12. A readable storage medium, the readable storage medium storing a program or an instruction, wherein when the program or the instruction is executed by a processor, the method according to any one of claims 1 to 7 is implemented.

13. A chip, comprising a processor and a communication interface, wherein the communication interface is coupled to the processor, and the processor is configured to execute a program or an instruction to implement the method according to any one of claims 1 to 7.
